# EUROPEAN PATENT SPECIFICATION

(11) **EP 2 358 785 B1**
(45) Date of publication and mention of the grant of the patent: **17.02.2016**
(21) Application number: 09775136.6
(22) Date of filing: 30.11.2009
(51) Int. Cl.: C08G 63/64, C08G 64/18

(54) **PROCESS TO PREPARE DI- AND MULTIBLOCK COPOLYMERS.**
VERFAHREN ZUR HERSTELLUNG VON DI- UND MULTIBLOCK-COPOLYMEREN
PROCÉDÉ DE PRÉPARATION DE COPOLYMÈRES DI ET MULTI-BLOC

(30) Priority: 12.12.2008 EP 08291193
(43) Date of publication of application: 24.08.2011
(73) Proprietor: TOTAL RESEARCH & TECHNOLOGY FELUY, 7181 Seneffe (BE); Centre National de la Recherche Scientifique (CNRS), 75016 Paris (FR)
(72) Inventor: CARPENTIER, Jean-françois, F-35690 Acigne (FR); HELOU, Marion, BE- 1050 Ixelles (BE); GUILLAUME, Sophie, F-35500 Vitré (FR); RAZAVI, Abbas, B-7000 Mons (BE)
(74) Representative: Garcia Martin, Margarita
(86) International application number: PCT/EP2009/066029
(87) International publication number: WO 2010/066597

(56) References cited:
- EP-A- 0 670 340
- WO-A-01/64771
- WO-A-91/16368
- FEIJEN J ET AL: "TRIBLOCK COPOLYMERS BASED ON 1,3-TRIMETHYLENE CARBONATE AND LACTIDE AS BIODEGRADABLE THERMOPLASTIC ELASTOMERS" MACROMOL. CHEM. PHYS., vol. 205, 2004, pages 867-875, XP002525776 cited in the application
- KRICHELDORF H R ET AL: "A-B-A TRIBLOCK COPOLYESTERS AND RANDOM COPOLYESTERS OF TRIMETHYLENE CARBONATE AND VARIOUS LACTONES VIA MACROCYCLIC POLYMERIZATION" MACROMOL. CHEM. PHYS., vol. 200, 1999, pages 1726-1733, XP002525777 cited in the application

## Description

There is an obvious need for polymer materials based on renewable resources and efficient processes for preparing them. Of particular interest are block copolymers which allow, upon adjusting the size and nature of each block, tuning of the physical properties to obtain very specific physical properties, for instance phase separation of blocks. As an example, diblock and triblock polycarbonate-polyesters that combine a soft poly(trimethylene carbonate) block (PTMC) and hard, crystallisable poly(L- or D-lactide) blocks (PLLA, PDLA), thus forming so-called thermoplastic elastomers, are biodegradable and biocompatible and thus find applications as biomaterials.

The synthesis of linear or star polycarbonates hydroxy-capped at each arm terminus is briefly documented in literature in the case of poly(trimethylene carbonate). The preparation of linear telechelic dihydroxy HO-PTMC-OH and 3-arms star trihydroxy R-(PTMC-OH)₃ polymers has been achieved by the ring-opening polymerization (ROP) of TMC in the presence of tin-based catalysts such as SnOct₂ (Oct = octanoate, 2-ethylhexanoate), and a diol or a triol respectively, such as 1,4-butanediol as described for instance in Fredrik Nederberg, Joens Hilborn and Tim Bowden, Macromolecules 2006, 39, 3907-3913, or triethyleneglycol as reported in Jan Lukaszczyk, Piotr Jelonek and Barbara Trzebicka, Pol. Polimery 2008, 53, 433-439, or 1,6-hexanediol or glycerol as reported in Zheng Zhang, Dirk W. Grijpma and Jan Feijen, Macromol. Chem. Phys., 2004, 205, 867-875, and in Patricia Y. W. Dankers, Zheng Zhang, Eva Wisse, Dirk W. Grijpma, Rint P. Sijbesma, Jan Feijen and E. W. Meijer Macromolecules, 2006, 39, 8763-8771 (Scheme 1). These reactions typically proceed at a temperature higher than 100 °C for a couple of hours. They are schematically represented in scheme 1.

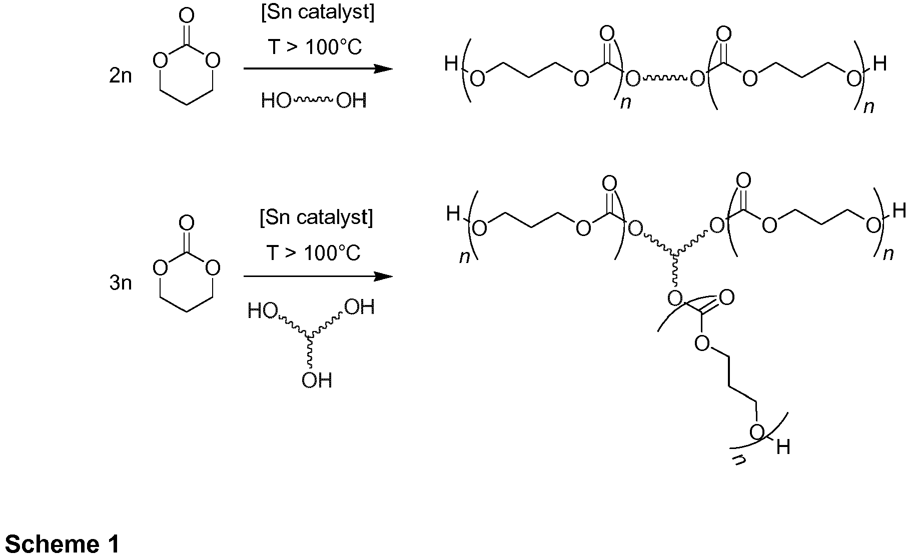

In some cases, macrodiols HO-X-OH have also been used as initiators/transfer agents to prepare linear telechelic dihydroxy HO-PTMC-X-PTMC-OH polymers, by ROP of TMC in the presence of tin catalysts, as described for instance with poly(ethylene glycol) (HO-PEG-OH) in Ying Zhang and Ren-Xi Zhuo, Biomaterials 2005, 26, 2089-2094, or in H. Morinaga, B Ochiai, H. Mori, T. Endo, J. Polym. Sci. 2006, 1958-1996 or with dihydroxy end-capped poly(caprolactone) (HO-PCL-OH) as described in Yong Tang Jia, Hak Yong Kim, Jian Gong, Duok Rae Lee and Bin Ding, Polymer Intern. 2004, 53, 312-319, or to prepare Y-shaped X-(PTMC-OH)₂ copolymers as reported with the ROP of TMC from poly(ethylene glycol)-CH-(CH₂OH)₂ and ZnEt₂ in Huai-Hong Zhang, Zi-Qun Huang, Bai-Wang Sun, Jia-Xiu Guo, Jian-Li Wang, Yao-Qiang Chen, J. Polym. Sci. 2008, 46, 8131-8140.

It has been reported that those linear telechelic dihydroxy HO-PTMC-OH and 3-arms star trihydroxy R-(PTMC-OH)₃ polymers can act as macroinitiators for the preparation of multiblock polycarbonate-polyester copolymers. Thus, PLA-PTMC-PLA triblock copolymers based on TMC and lactide as biodegradable thermoplastic elastomers have been prepared starting from linear telechelic dihydroxy HO-PTMC-OH polymers, lactide (either L-, D- or D,L-LA) and SnOct₂ as the catalyst, as reported in Zheng Zhang, Dirk W. Grijpma and Jan Feijen, Macromol. Chem. Phys., 2004, 205, 867-875. It is represented in scheme 2.

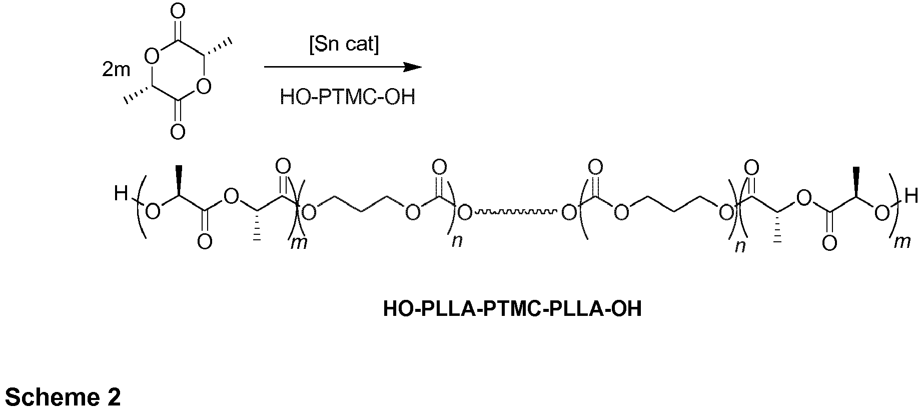

The preparation of triblock Polyester-PTMC-Polyester copolymers, wherein polyester can be PHB = poly(3-hydroxybutyrate) (PHB) or, poly(caprolactone) (PCL), or poly(valerolactone) (PVL), or poly(lactide) (PLA) has been reported in Hans R. Kricheldorf and Andrea Stricker, Macromol. Chem. Phys., 1999, 200, 1726-1733. The method used involved the sequential addition of TMC and then BBL (BBL = *rac*-beta-butyrolactone) or VL (δ-valerolactone) or CL (ε-caprolactone) or LA (lactide) onto the tin-based di-initiator 2,2-dibutyl-2-stanna-1,3-dioxepane (DSDOP). In this process, a stoechiometric amount of tin vs macromolecules is used to prepare the ABA-type block copolymer, and there was no use of any alcohol or macrodiols as transfer agents.

It is an aim of the present invention to use polyesters or polycarbonates macrodiols as co-initiator and chain transfer agent in the immortal ring-opening polymerization of the comonomer.

It is an aim of the present invention to provide di-, tri-, or multi-block polyester/polycarbonate copolymers.

It is also an aim of the present invention to prepare fully biodegradable di-, tri-, or multi-block linear, branched or star-shaped polyester/polycarbonate copolymers.

It is a further aim of the present invention to tailor di-, tri-, or multi-block copolymers with desired properties.

Any one of these aims is, at least partially, fulfilled by the present invention.

Accordingly, the present invention discloses a process for preparing di-, tri, or multi-block polyester/polycarbonate (PC) copolymers by ring-opening polymerisation in the presence of a catalyst system comprising a compound selected from a Lewis acidic metal salt said process further comprising either a linear monohydroxy HO-PC-OR, or a linear telechelic dihydroxy HO-PC-OH, or a star polyhydroxy R-(PC-OH)*ₙ* end-capped polycarbonate acting both as transfer agent and as co-initiator via hydroxyl group(s), wherein PC is a polycarbonate chain obtained by ring-opening polymerisation of a carbonate monomer.

The present invention discloses a process for preparing di-, tri, or multi-block polyester/polycarbonate polymers by immortal ring-opening polymerization according to claim 1 that comprises the steps of:
a) providing catalyst system based on a compound selected from a Lewis acidic metal salt selected from salt metallic complexes of formula M(OSO₂CF₃) n or M(N(OSO₂CF₃)₂)n, wherein M is Al and n is the valence of M;
b) providing either a linear monohydroxy HO-PC-OR, or a linear telechelic dihydroxy HO-PC-OH, or a star polyhydroxy R-(PC-OH)n end-capped polycarbonate acting both as co-initiator and as transfer agent via hydroxyl group(s), wherein PC is a polycarbonate chain obtained by immortal ring-opening polymerisation of a cyclic carbonate monomer, said monohydroxy or linear telechelic dihydroxy, or star polyhydroxy being provided in excess with respect to the amount catalyst component;
c) providing a cyclic ester/carbonate monomer selected, for instance, from 5-, 6-, or 7- membered cyclic carbonate such as for example, 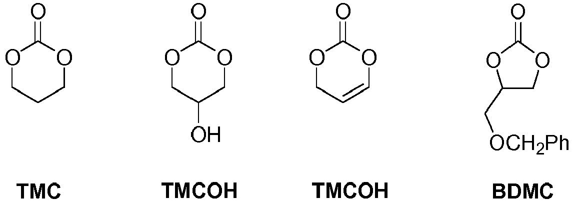 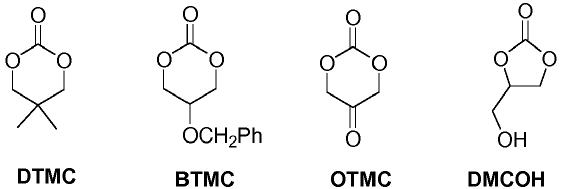 lactide (LA), glycolide , rac-beta-butyrolactone (rac-BBL) or epsilon-caprolactone (CL), or any other lactone, diester, cyclic carbonate, morpholinediones, ...
d) maintaining under polymerisation conditions at a temperature of from room temperature to 150 °C in bulk (melted monomer) or in a solvent;
e) retrieving a di- tri- or multi-block copolymer.

The macro-polyol plays two roles:
- according to the type of catalyst used, it acts either as an external nucleophile for initiating polymerisation via ring-opening of a monomer activated for example with Lewis acid or organic base catalysts, or for transforming the pre-catalyst, for example a metal-amido or metal-alkyl complex, that has little or no activity, into an active metal-alkoxide species, via an alcoholysis process;
- it also acts as a transfer agent, by generating multiple polymer chains. Excess alcohol acts as transfer agent, transferring reversibly propagating polycarbonate chains from the active metal center to dormant hydroxy-end capped polycarbonate chains. Accordingly, it is observed that the number average molecular weight increases when the monomer/alcohol ratio increases. The latter chain transfer process can be represented schematically as follows:

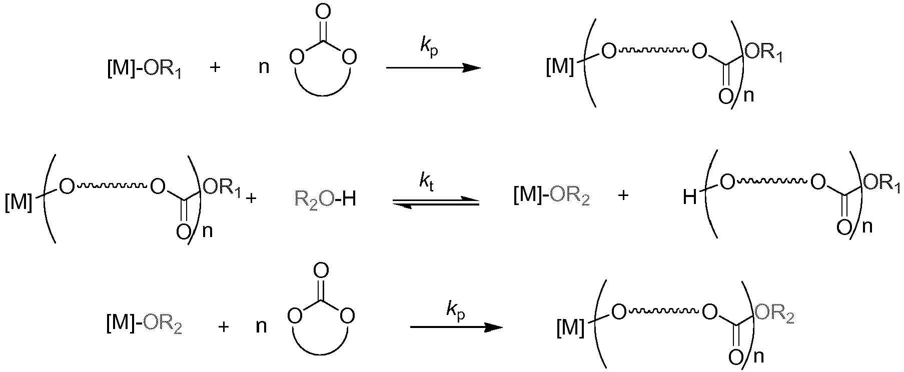

The solvent is typically selected from toluene, xylene, THF or methylcyclohexane.

The metallic salt can be selected from metallic complexes of formula M(OSO₂CF₃)ₙ, hereafter referred to as triflates or OTf or M(N(OSO₂CF₃)₂)ₙ, hereafter referred to as triflimidates or NTf₂ wherein n is the valence of M.

Preferably, M is Al.

Among the preferred catalytic compounds according to the present invention, one can cite Al(OTf)₃, Al(NTf₂)₃.

These catalysts act by an activated monomer pathway, in the combination with an external nucleophile, typically the PC-(OH)*ₙ* compound.

In addition, the amount of catalyst system is minimised with respect to the amount of monomer leading to polymers bearing less metallic traces than the tin-based catalysts of the prior art, for the production of related block copolymers. The ratio monomer to catalyst system is of at least 100, preferably of at least 1000 and more preferably of at least 1500.

Hydroxy-end-capped polyester/polycarbonates can be prepared by ring-opening polymerisation (ROP) of a cyclic ester/carbonate monomer in the presence of a catalyst and an alcohol that acts as an initiator and as a transfer agent and wherein the ratio alcohol to catalyst is of at least 5. When using a mono-alcohol R'OH, all polyesters/polycarbonates produced via this technique are thus capped at one end by a hydroxy group and at the other macromolecule terminus by a ester/carbonate moiety. For instance, HO-PTMC-OR homopolymers have been prepared in high yield by ROP of carbonate TMC, using as catalyst either (BDI)Zn[N(SiMe₃)₂], Al(OTf)₃ or dimethylaminopyridine (DMAP), in the presence of an alcohol (R'OH) selected typically from BnOH or *i*PrOH, wherein PTMC is the polyTMC. The homopolymers have controlled molecular weights and narrow polydispersity. The reaction is presented schematically in scheme 3. When using a poly-ol, all polyesters/polycarbonates produced via this technique are thus capped at each ends by a hydroxy group.

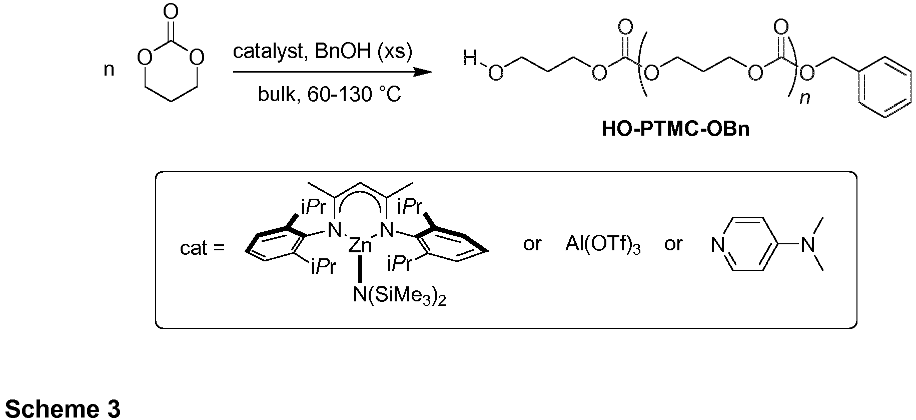

Such hydroxy-end-capped HO-PTMC-OR' homopolymers can be subsequently used as macro-initiators and transfer agents, to prepare with high efficiency a variety of diblock copolymers. The reactions are performed in the presence of a catalyst selected for example from Al(OTf)₃ and they allow the immortal ROP of cyclic polar monomers such as TMC, TMC(OMe)₂, *rac*-BBL or lactides (LA) or any heterocyclic monomer among lactones, diesters, carbonates, morpholinediones. Some of these are represented in scheme 4, as non-limitative examples.

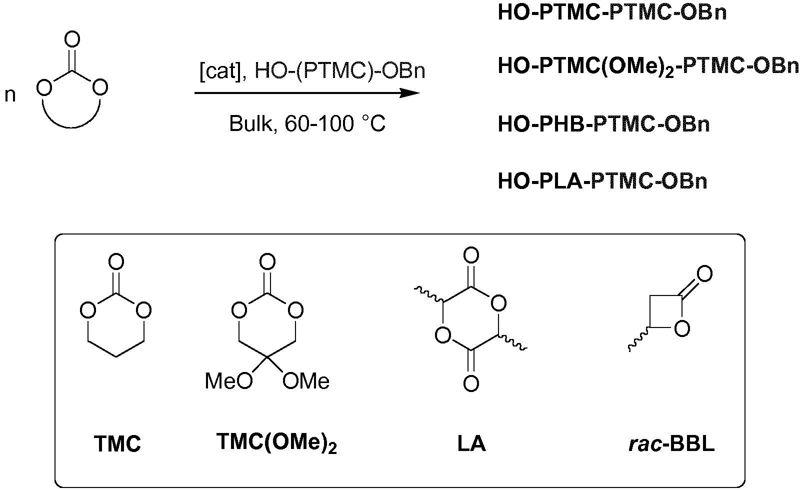

Alternatively, a variety of diblock AB, or triblock ABA, or multiblock ...CABAC... copolymers can be prepared from the block copolymerization of monomers A, B, C..., using the corresponding monoalcohol, diol, or poly-ol, respectively.

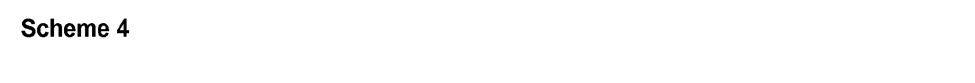

These reactions are carried out at a temperature ranging between room temperature (about 25 °C) and 150 °C, preferably between 50 and 150 °C, more preferably between 80 and 100 °C. The temperature depends upon the nature of catalyst system and on the monomer. For example, aluminium-based systems are more tolerant but less active than zinc-based systems and thus demand a higher temperature than zinc-based systems. For example lactides are less reactive than TMC and thus also demand a higher temperature than TMC.

### List of figures.

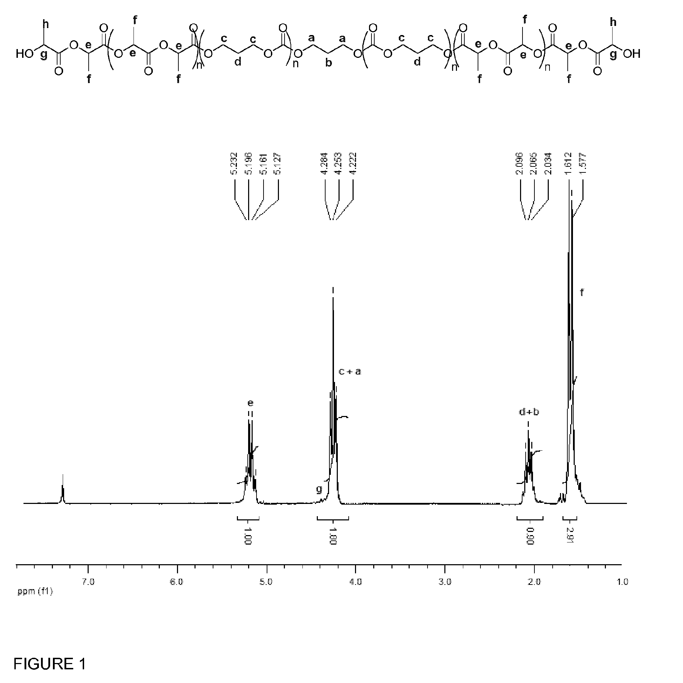

Figure 1 represents the ¹H NMR (CDCl₃, 200 MHz) spectrum of a triblock PLA-PTMC-PLA copolymer.

It must be noted that when macromer HO-PTMC-OBn has been synthesised, precipitated and stocked before being used in the multi-block polymerisation. Consequently it has potentially absorbed water and has thus been potentially deteriorated, thereby explaining the poorer correlation between the theoretical and experimental values of number average molecular weight Mn.

The mechanical properties of the copolymers were evaluated using compression-moulded sheets. The copolymers were moulded by mini max moulder of custom scientific instruments Inc at temperatures respectively of 180 °C for PLA and of 220 °C for PTMC.

Tensile tests were carried out at room temperature according to ASTMD 882 by a ZWICK (MEC125/2) with load cell 200 N at a cross-head speed of 10 mm/min. Strength and elongation values at break were calculated based on the dynamic tensile diagrams. The sample specimen deformation was derived from the grip-to-grip separation, which was initially 10 mm.

The thermal properties of the purified polymers were evaluated by differential scanning calorimetry (DSC 131, Setaram instrument). Experiments were performed in aluminium pans and helium was used as gas purge.

6-12 mg samples were used for DSC analysis. For the copolymers, samples were heated from - 40 °C to 200 °C with a heating rate of 10 °C/min, cooled down to - 40 °C with a cooling rate of 10 °C/min, and then heated again to 200 °C at the same heating rate. Melting (Tm) and glass transition (Tg) temperature of samples were obtained from the second heating curves.

### Examples 1 to 3.

Different, more robust and/or cheaper catalyst systems involving, instead of an organometallic catalyst precursor, a Lewis acidic metal salt were also investigated. Aluminum triflate, in combination with HO-PTMC-OBn were selected for those investigations in the ROP of technical-grade LLA. The reactions were carried out at a temperature of 130 °C, in a 4M solution of toluene, with purified LLA. The results are summarized in Table 1.

**Table 1.**

| ex | [catalyst] | *M*ₙ (g.mol⁻¹) (*M*_{w}/*M*ₙ) [HO-PTMC-OBn] | [LLA]₀/ [catalyst]₀/ [HO-PTMC-OBn]₀ | Time (min) | Conv. (%)^{a} | *M̅n***ₜₕₑₒ*^{b}*** (g.mol⁻¹) | *M̅n***_{SEC}*^{c}*** (g.mol⁻¹) | *M̅w*/ *M̅n^{d}* |
|---|---|---|---|---|---|---|---|---|
| 1 | Al(OTf)₃ | 15 300 (1.64) | 1 500/1/5 | 840 | 72 | 46 400 | 22 400 | 1.35 |
| 2 | Al(OTf)₃ | 10100 (1.57) | 1 500/1/5 | 4200 | 93 | 49560 | 43 850 | 1.61 |
| 3 | Al(OTf)₃ | 33 780 (1.55) | 1 000/1/5 | 1 440 | 70 | 55 940 | 26 800 | 1.47 |

| | | | | | | | | |
|---|---|---|---|---|---|---|---|---|
| ^{a} Determined by ¹H NMR ^{b}M_{n,theo} = [LLA]₀/[HO-PTMC-OBn] x 144 x conversion + M_{(HO-PTMC-OBn)} ^{c} Determined by SEC vs PS standards; ; *M*ₙ values corrected for hydrodynamic volume differences (correction coefficient 0.73 for PTMC and 0.58 for PLA). | | | | | | | | |

In examples 1 and 3 macromer HO-PTMC-OBn has been synthesized, precipitated and stocked before being used in the multi-block polymerisation. In example 2 on the contrary polymerisation was carried out by sequential reaction without preliminary isolation of HO-PTMC-OBn.

### Examples 4 and 5.

### Production of Multiblock Copolymers.

A diol/triol was used in the ROP of a cyclic carbonate as initiator/transfer agent. The resulting polycarbonate contained two/three hydroxy chain-ends. Al(OTf)₃ was used as catalyst component and 1,3-propanediol or 1,4-benzenedimethanol or glycerol transfer agent/initiator. The ROP process is described in scheme 5.

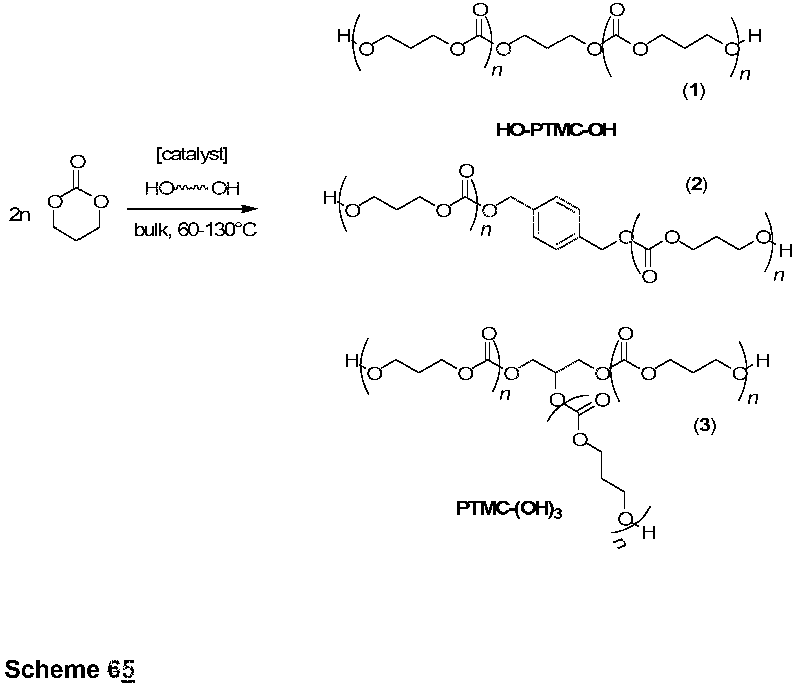

The telechelic HO-PTMC-OH/R(PTMC-OH)₃ homopolymers prepared in scheme 6 were used subsequently as transfer agent/initiator for the preparation of ABA/R(AB)₃-type triblock copolymers. This process was used in the preparation of HO-PLLA-PTMC-PLLA-OH triblock copolymers. The reactions have been conducted in highly concentrated toluene solutions and are represented in scheme 6. The results obtained using aluminum triflate as catalyst with technical grade LLA are summarised in Table 2. For examples 4 to 5, displayed in Table 2, the reactions were carried out at a temperature of 130 °C and the catalyst system is indicated in the Table. Figure 1 represents the ¹H NMR spectrum of PLA-PTMC-PLA copolymer.

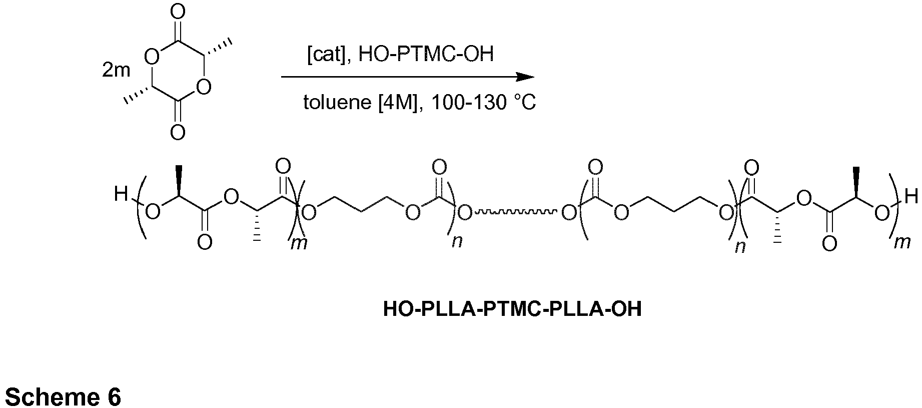

**Table 2.**

| ex | [catalyst] | *M*ₙ (g.mol⁻¹) (*M*_{w}/*M*ₙ) HO-PTMC-OH | [LLA]₀/ [cat]₀/ [HO-PTMC-OH]₀ | Time (min) | Conv . (%)^{a} | *M̅n***ₜₕₑₒ*^{b}*** (g.mol^{- 1}) | *M̅n***_{SEC}*^{c}*** (g.mol⁻¹) | *M̅w*/*M̅n^{c}* |
|---|---|---|---|---|---|---|---|---|
| 4 | Al(OTf)₃ | 10 000 (1.45) | 1 500/1/5 | 1 440 | 100 | 53 200 | 15 200 | 1.28 |
| 5 | Al(OTf)₃ | Ca. 15 000 | 1 500/1/5 | 1 440 | 90 | 48 880 | 40 550 | 1.48 |

| | | | | | | | | |
|---|---|---|---|---|---|---|---|---|
| ^{a} Determined by ¹H NMR ^{b} M_{n,theo} = [LLA]₀/[HO-PTMC-OH] x 144 x conversion + M_{(HO-PTMC-OH)} ^{c} Determined by SEC vs PS standards; *M*ₙ values corrected for hydrodynamic volume differences (correction coefficient 0.73 for PTMC and 0.58 for PLA). | | | | | | | | |

Example 5 was conducted as sequential monomer addition without preliminary isolation of HO-PTMC-OH, like a block copolymerization using a diol

### Example 6.

Other diblock copolymers were prepared as follows. 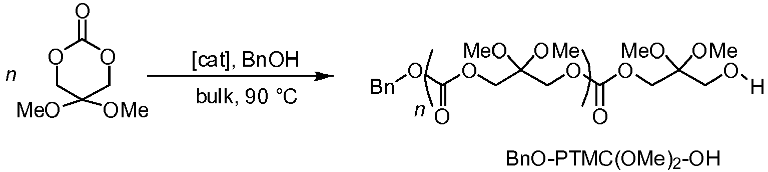 Ex. 6

Their mechanical and thermal properties are presented respectively in Table 3.

**TABLE 3.**

| | Polymers | | | Injection conditions | | traction | | | | |
|---|---|---|---|---|---|---|---|---|---|---|
| Ex | Mn PTMC(OMe)₂ g/mol | Mn PLLA g/mol | Mn PTMC g/mol | Copo temp (°C) | Mould temp (°C) | Elastic Modulus (Mpa) | Yield (Mpa) | ε-F max (Mpa) | σ rupture (Mpa) | ε rupture (%) |
| 6 | 85 000 | - | - | 180 | 23 | 1 186 | 5 | 0.6 | 15 | 0.6 |

## Claims

1. A process for preparing di-, tri, or multi-block polyester/polycarbonate polymers by immortal ring-opening polymerisation that comprises the steps of:
a) providing a catalyst system consisting of a Lewis acidic metal salt selected from salt metallic complexes of formula M(OSO₂CF₃) n or M(N(OSO₂CF₃)₂)n, wherein M is Al and n is the valence of M;
b) providing either a linear monohydroxy HO-PC-OR, or a linear telechelic dihydroxy HO-PC-OH, or a star polyhydroxy R-(PC-OH)*ₙ* end-capped polyester/polycarbonate acting both as co-initiator and as transfer agent via hydroxyl group(s), wherein PC is a polyester/polycarbonate chain obtained by ring-opening polymerisation of a cyclic ester/carbonate monomer, said monohydroxy or linear telechelic dihydroxy, or star polyhydroxy being provided in excess with respect to the amount catalyst component;
c) providing a cyclic ester/carbonate monomer selected, for instance, from 6- or 7-membered cyclic carbonate such as TMC or TMC(OMe)₂, lactide, glycolide, rac-beta-butyrolactone or epsilon-caprolactone (CL), or any other lactone, diester, cyclic carbonate, or a morpholinedione.
d) maintaining under polymerisation conditions at a temperature of from room temperature to 150 °C in a solvent;
e) retrieving a di- tri- or multi-block copolymer.

2. The process of claim 1 wherein the metallic salt is selected from Al(OTf)₃, Al(NTf₂)₃.

3. The process of any one of the preceding claims wherein hydroxy-end-capped polyester/polycarbonates can be prepared by immortal ring-opening polymerisation (ROP) of a cyclic ester/carbonate monomer in the presence of a catalyst and an alcohol that acts as an initiator and a transfer agent, and wherein the ratio alcohol to catalyst is of at least 5.

4. Di-, tri- or multiblock polyesters/polycarbonates (co)polymers obtained by the process of any one of claims 1 to 3.

5. Use of macro-ol (polyester/polycarbonate-n-ol) as transfer agent in the immortal ring-openeing polymerisation of cyclic ester/carbonate monomer.

## Patentansprüche

1. Verfahren zur Herstellung von Di-, Tri- oder Multiblockpolyester-/- polycarbonatpolymeren durch immortale Ringöffnungspolymerisation, das die Schritte umfasst:
a) Bereitstellen eines Katalysatorsystems, das ein Lewis-Säure-Metallsalz umfasst, ausgewählt aus metallischen Salzkomplexen der Formel M(OSO₂CF₃)ₙ oder M(N(OSO₂CF₃)₂)ₙ, wobei M Al ist und n die Valenz von M ist;
b) Bereitstellen eines mit linearem Monohydroxy-HO-PC-OR oder linearem telechelischem Dihydroxy-HO-PC-OH oder sternförmigem Polyhydroxy-R-(PC-OH)ₙ endgekappten Polyesters oder Polycarbonats, das sowohl als Coinitiator als auch als Transfermittel agiert, über eine oder mehrere Hydroxylgruppent, wobei PC eine Polyester-/Polycarbonatkette ist, die durch Ringöffnungspolymerisation eines cyclischen Esters oder Carbonatmonomers erhalten wurde, wobei das Monohydroxy oder lineare telechelische Dihydroxy oder sternenförmige Polyhydroxy in Bezug auf die Katalysatorkomponentenmenge im Überschuss bereitgestellt wird;
c) Bereitstellen eines cyclischen Esters oder Carbonatmonomers, beispielsweise ausgewählt aus 6- oder 7-gliedrigem cyclischen Carbonat wie TMC oder TMC(OME)2, Lactid, Glycolid, rac-beta-Butyrolacton oder epsilon-Caprolacton (CL) oder ein/en anderes/n Lacton, Diester, cyclisches Carbonat oder Morpholindion,
d) Halten unter Polymerisationsbedingungen auf einer Temperatur von Raumtemperatur bis 150 °C in einem Lösungsmittel;
e) Rückgewinnen eines Di-, Tri- oder Multiblockcopolymers.

2. Verfahren nach Anspruch 1, wobei das metallische Salz aus Al(OTf)3), Al(NTf2)3 ausgewählt ist.

3. Verfahren nach einem der vorstehenden Ansprüche, wobei die mit Hydroxy endgekappten Polyester/Polycarbonate durch immortale Ringöffnungspolymerisation (ROP) eines cyclischen Esters/Carbonatmonomers in der Gegenwart eines Katalysators und eines Alkohols hergestellt werden können, der als Initiator und Transfermittel agiert, und wobei das Verhältnis von Alkohol zu Katalysator zumindest 5 beträgt.

4. Di-, Tri- oder Multiblockpolyester-/-polycarbonat(co)polymere, die mithilfe des Verfahrens nach einem der Ansprüche 1 bis 3 erhalten wurden.

5. Verwendung von Makro-ol (Polyester-/Polycarbonat-n-ol) als Transfermittel bei der immortalen Ringöffnungspolymerisation von cyclischem Ester/Carbonatmonomer.

## Revendications

1. Procédé de préparation de polymères de polyester/polycarbonate di-, tri, ou multiblocs par polymérisation par ouverture de cycle immortelle qui comprend les étapes de :
a) fourniture d'un système de catalyseur constitué d'un sel de métal acide de Lewis choisi parmi des complexes métalliques de sel de formule M(OSO₂CF₃)ₙ ou M(N(OSO₂CF₃)₂)ₙ, dans lesquelles M est Al et n est la valence de M ;
b) fourniture d'un monohydroxy HO-PC-OR linéaire, ou un polyester ou polycarbonate à coiffe terminale dihydroxy HO-PC-OH téléchélique linéaire, ou un polyhydroxy R-(PC-OH)ₙ en étoile agissant à la fois en tant que co-initiateur et en tant qu'agent de transfert via un ou des groupe(s) hydroxyle, où PC est une chaîne de polyester/polycarbonate obtenue par polymérisation par ouverture de cycle d'un monomère d'ester ou carbonate cyclique, lesdits monohydroxy, ou dihydroxy téléchélique linéaire, ou polyhydroxy en étoile étant fournis en excès par rapport à la quantité de composant de catalyseur ;
c) fourniture d'un monomère d'ester ou carbonate cyclique choisi, par exemple, parmi un carbonate cyclique de 6 ou 7 chaînons tel que TMC ou TMC(OMe)₂, lactide, glycolide, rac-bêta-butyrolactone ou epsilon-caprolactone (CL), ou un ou une autre lactone, diester, carbonate cyclique, ou morpholinedione quelconque.
d) maintien dans des conditions de polymérisation à une température de la température ambiante à 150 °C dans un solvant ;
e) récupération d'un copolymère di-, tri- ou multibloc.

2. Procédé de la revendication 1 dans lequel le sel métallique est choisi parmi Al(OTf)₃, Al(NTf₂)₃.

3. Procédé de l'une quelconque des revendications précédentes dans lequel les polyesters/polycarbonates à coiffe terminale hydroxy peuvent être préparés par polymérisation par ouverture de cycle immortelle (ROP) d'un monomère d'ester/carbonate cyclique en présence d'un catalyseur et d'un alcool qui agit en tant qu'initiateur et d'un agent de transfert, et dans lequel le rapport de l'alcool au catalyseur est d'au moins 5.

4. (Co)polymères de polyesters/polycarbonates di-, tri- ou multibloc obtenus par le procédé de l'une quelconque des revendications 1 à 3.

5. Utilisation de macro-ol (polyester/polycarbonate-n-ol) en tant qu'agent de transfert dans la polymérisation par ouverture de cycle immortelle de monomère d'ester/carbonate cyclique.
